# FASCICULE DE BREVET EUROPEEN

(11) **EP 2 857 263 B1**
(45) Date de publication et mention de la délivrance du brevet: **04.05.2016**
(21) Numéro de dépôt: 14167990.2
(22) Date de dépôt: 12.05.2014
(51) Int. Cl.: B60R 13/02, B60R 13/08

(54) **Elément de toit pour rigidifer le toit d'un véhicule automobile**
Dachelement zum Aussteifen des Dachs eines Kraftfahrzeugs
Roof element for rigidifying the roof of a motor vehicle

(30) Priorité: 03.10.2013 FR 1359585
(43) Date de publication de la demande: 08.04.2015
(73) Titulaire: ADHEX TECHNOLOGIES, 21300 Chenôve (FR)
(72) Inventeur: Vadot, Gérald, 21190 Corcelles-les-Arts (FR); Durand, Hervé, 21000 Dijon (FR); Favatta, Hervé, 21190 Binges (FR)
(74) Mandataire: GLN SA

(56) Documents cités:
- WO-A1-01/68406
- JP-A- S5 973 338
- JP-A- S58 214 473

## Description

### DOMAINE TECHNIQUE

La présente invention concerne un élément de toit et en particulier un panneau intérieur de plafond pour un toit de véhicule pour améliorer la rigidité dudit toit.

### ART ANTERIEUR

Il est bien connu que, dans le domaine de l'automobile, les constructeurs cherchent à diminuer le poids total de leurs véhicules afin d'en réduire la consommation énergétique et d'en abaisser le coût de revient. Ces efforts d'allègement portent en priorité sur les pièces métalliques de carrosserie car elles contribuent significativement au poids total des véhicules.

En particulier, ces efforts d'allègement portent sur le pavillon de toit des véhicules dans la mesure où sa surface est grande et où il ne constitue pas une pièce structurante ou de sécurité en cas de chocs frontal ou latéral. Ainsi, la réduction permanente de l'épaisseur de la tôle métallique du pavillon de toit a conduit à fabriquer des pavillons de toit de moins en moins rigides, extrêmement souples et déformables. Les pavillons de toit présentent désormais une déformation systématique et visible à l'oeil nu, cette déformation étant accentuée par la brillance et le glacis surfacique de la peinture appliquée sur l'extérieur des pavillons.

Par ailleurs, la réduction de l'épaisseur des pavillons de toit métalliques a également amplifié les phénomènes de résonances vibratoires du pavillon, engendrés pour l'essentiel par la transmission par voie « solidienne » de vibrations dues au roulage et au groupe moteur du véhicule.

Afin de remédier à ces inconvénients, on a déjà imaginé des dispositifs dits raidisseurs de toit permettant de limiter la déformation des pavillons de toit et de réduire les vibrations.

C'est le cas notamment de la demande de brevet français FR 2 299 964 qui décrit un procédé de fabrication de panneaux en forme à base de carton et de mousse. Le procédé consiste à asperger avec une solution d'élastomère, l'une des faces d'une plaque de carton et d'une plaque de mousse, à poser la face non aspergée de la plaque de mousse sur celle aspergée de la plaque de carton, à mettre en place sur la face aspergée de la mousse, le recouvrement de finition, à retourner le sandwich ainsi formé pour permettre dans l'opération suivante, l'aspersion de la face vierge de la plaque de carton avec la solution d'élastomère, à déposer sur cette face enduite des bandes ou une plaque de mousse et à mettre cet ensemble dans un moule dans lequel le panneau sera embouti à la forme désirée, et maintenu dans cette forme grâce à la polymérisation de la solution d'élastomère.

Ce type de panneau, outre le coût de fabrication trop élevé, ne procure pas une absorption suffisante des vibrations notamment.

De nombreuses autres solutions ont été imaginées. On connait notamment des éléments de toit, raidisseurs, décrits dans les demandes de brevet JP10071646, DE 19702581, JP8332904 et EP 1 298 034.

La publication WO 01/68406 A1 divulgue un élément de toit d'après le préambule de la revendication 1.

Tous ces éléments de toit présentent l'inconvénient d'être onéreux à fabriquer et/ou induisent un temps de montage trop long grevant le coût de fabrication du véhicule.

La solution la plus fréquemment mise en oeuvre à l'heure actuelle consiste à d'abord coller une ou plusieurs plaques dites IFF, selon l'acronyme de « Insonorisant Fusible en Feuille » sur la paroi intérieure du pavillon de toit, puis à rapporter, par collage superposé, un raidisseur en carton rigide sur le pavillon. Le collage du carton est réalisé par des adhésifs double face mousse épais permettant de résorber le jeu dimensionnel délimité par l'épaisseur des plaques IFF.

Malgré cette précaution, la limitation de la pression de la plaque IFF sur le pavillon est aléatoire et ne permet pas de garantir une absence totale de déformation du pavillon.

Par ailleurs, en raison d'un volume d'air confiné important entre le pavillon et le raidisseur en carton, les bruits de tambourinement des gouttes de pluie sur le pavillon sont amplifiés, l'espace d'air interstitiel agissant comme une caisse de résonance acoustique.

De plus, ce type de solution procure un surcoût substantiel en terme de main d'oeuvre et en temps d'occupation de la ligne de montage ce qui grève le coût de fabrication du véhicule. En effet, l'opérateur en bord de ligne de montage doit d'abord positionner précisément, puis coller les plaques IFF sur le pavillon de toit. Ensuite, il doit peler manuellement et individuellement les films protecteurs anti-adhérents de toutes les bandes d'adhésif double faces préalablement collées sur le carton raidisseur. Il est bien connu que ces opérations d'amorçage, puis de décomplexage du film protecteur d'un adhésif double face mousse sont fastidieuses et délicates. Les risques inhérents à l'enlèvement d'un film protecteur d'une bande d'adhésif double face mousse sont le décollement local de la bande adhésive du carton, la déchirure partielle de la mousse et la pollution de l'adhésif.

### EXPOSE DE L'INVENTION

L'un des buts de l'invention est donc de remédier à ces inconvénients en proposant un élément de toit de conception simple et peu onéreuse, procurant une limitation efficace des vibrations, des bruits de tambourinement des gouttes de pluie, et des déformations, et un montage rapide et aisé sur le pavillon de toit.

A cet effet et conformément à l'invention, il est proposé un élément de toit, en particulier panneau intérieur de plafond pour un toit de véhicule, pour améliorer la rigidité dudit toit comportant une pièce en carton ondulé et au moins une pièce apte à absorber les vibrations, ladite pièce amortissante étant solidaire de la pièce en carton ondulé ; ledit élément de toit est remarquable en ce que ladite pièce est obtenue dans du carton ondulé à double cannelure dans lequel est formé au moins un creux, ladite pièce amortissante s'étendant dans ledit creux de telle sorte que la face supérieure de ladite pièce amortissante affleure la face supérieure de la pièce en carton ondulé.

Afin d'assurer la fixation de l'élément de toit sur le pavillon de toit, la pièce en carton ondulé comporte une pluralité de bandes d'adhésif sensible à la pression déposées sur la face supérieure de ladite pièce en carton ondulé et sur la paroi de fond du creux recevant la pièce amortissante.

Par ailleurs, la face supérieure de la pièce amortissante comporte une couche d'un adhésif sensible à la pression.

De préférence, la pièce amortissante présente un grammage surfacique compris entre 4 et 15 Kg/m2 et consiste en une plaque de masse lourde bitumeuse.

Ladite plaque bitumeuse comporte des charges minérales et/ou des charges magnétiques.

Par ailleurs, l'élément de toit suivant l'invention comporte un film protecteur coiffant les bandes d'adhésif sensible à la pression déposées sur la face supérieure de la pièce en carton ondulé et la couche d'adhésif sensible à la pression de la face supérieure de la pièce amortissante.

Ledit film protecteur consiste dans une feuille de papier siliconée.

Selon une première variante d'exécution de l'élément de toit suivant l'invention, la pièce en carton ondulé est obtenue dans du carton ondulé à double cannelure comportant une cannelure supérieure et une cannelure inférieure, la cannelure supérieure étant plus petite que la cannelure inférieure.

Ledit creux est formé dans la pièce en carton ondulé par une découpe dans la cannelure supérieure et dans une partie de la cannelure inférieure et par un écrasement de la partie découpée.

Selon une seconde variante d'exécution de l'élément de toit suivant l'invention, la pièce en carton ondulé est obtenue dans du carton ondulé à double cannelure dont la cannelure supérieure présente des dimensions et formes identiques à la cannelure inférieure.

Selon une troisième variante d'exécution de l'élément de toit suivant l'invention, la pièce en carton ondulé est obtenue dans une pièce en carton ondulé à simple cannelure dont une partie est découpée pour former un trou traversant puis repliée et collée sur la seconde partie pour former la pièce en carton ondulé à double cannelure.

Selon une autre variante d'exécution de l'élément de toit suivant l'invention, la pièce en carton ondulé est constituée d'une première pièce en carton ondulé à simple cannelure et d'une seconde pièce en carton ondulé à simple cannelure, de même forme et dimension que la première pièce, et dans laquelle un trou traversant est découpé, la seconde pièce étant collée sur la première pièce.

Par ailleurs, les bandes d'adhésif sensible à la pression consistent dans des bandes d'adhésif comportant une première couche d'adhésif sensible à la pression, une couche en mousse et une seconde couche d'adhésif sensible à la pression.

Ladite couche de mousse présente de préférence une épaisseur comprise entre 500 et 1300 µm et les couches d'adhésif sensible à la pression présentent une épaisseur comprise entre 50 et 100 µm.

Lesdites couches d'adhésif sensible à la pression sont obtenues dans un adhésif acrylique à base solvant auto-réticulant.

De plus, la couche de mousse présente une densité comprise entre 40 Kg/m3 et 160 Kg/m3.

Avantageusement, la couche de mousse est obtenue dans de la mousse de Polyéthylène (PE) à cellules fermées réticulée physique.

Par ailleurs, les bandes d'adhésif sensible à la pression présentent une résistance en traction-cisaillement avant vieillissement supérieure ou égale à 0.1 MPa.

Lesdites bandes d'adhésif sensible à la pression présentent également une résistance en traction-cisaillement après vieillissement supérieure ou égale à 0.2 MPa.

### DESCRIPTION SOMMAIRE DES FIGURES

D'autres avantages et caractéristiques ressortiront mieux de la description qui va suivre de plusieurs variantes d'exécution, données à titre d'exemples non limitatifs, de l'élément de toit conforme à l'invention, en référence aux dessins annexés sur lesquels :
- la figure 1 est une vue en perspective d'un élément de toit suivant l'invention positionné sur un pavillon de toit d'un véhicule automobile,
- la figure 2 est une vue de dessus d'un élément de toit conforme à l'invention,
- la figure 3 est une vue en coupe transversale schématique de l'élément de toit suivant l'invention représenté sur la figure 2,
- la figure 4 est une vue en coupe d'une bande d'adhésif de l'élément de toit suivant l'invention représenté sur la figure 3,
- les figures 5A à 5E sont des vues en coupe schématiques des différentes étapes du procédé de fabrication de l'élément de toit suivant l'invention,
- la figure 6 est une vue en coupe transversale schématique d'une variante d'exécution de l'élément de toit suivant l'invention,
- la figure 7 est une vue en coupe transversale schématique d'une autre variante d'exécution de l'élément de toit suivant l'invention,
- les figures 8A à 8E sont des vues en coupe schématiques des différentes étapes d'une variante d'exécution du procédé de fabrication de l'élément de toit suivant l'invention,
- les figures 9A à 9G sont des vues en coupe schématiques des différentes étapes d'une autre variante d'exécution du procédé de fabrication de l'élément de toit suivant l'invention,
- les figures 10A à 10F sont des vues en coupe schématiques des différentes étapes d'une dernière variante d'exécution du procédé de fabrication de l'élément de toit suivant l'invention.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas tracées à l'échelle.

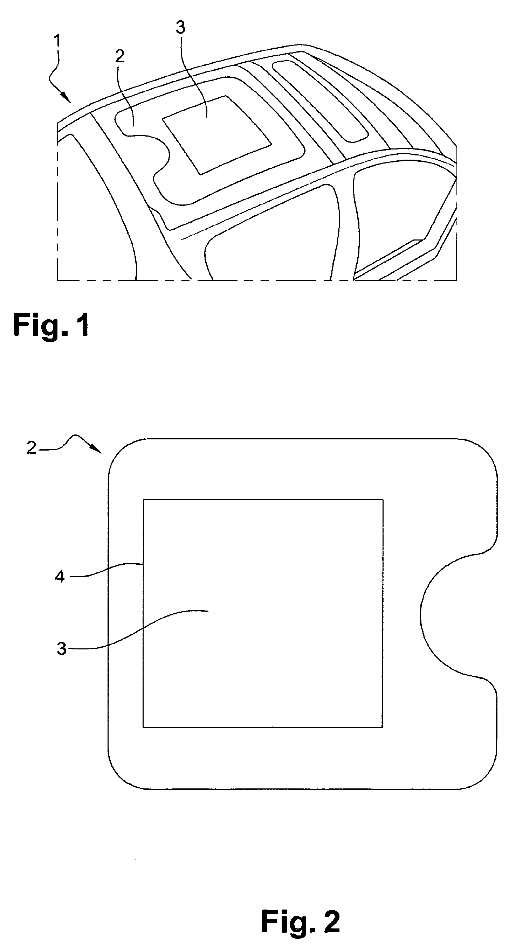

En référence à la figure 1, l'élément de toit suivant l'invention, pour améliorer la rigidité du pavillon de toit d'un véhicule (1) comporte une pièce sensiblement rectangulaire en carton ondulé (2) et une pièce dite amortissante (3), apte à absorber les vibrations et solidaire de la pièce rectangulaire en carton ondulé (2).

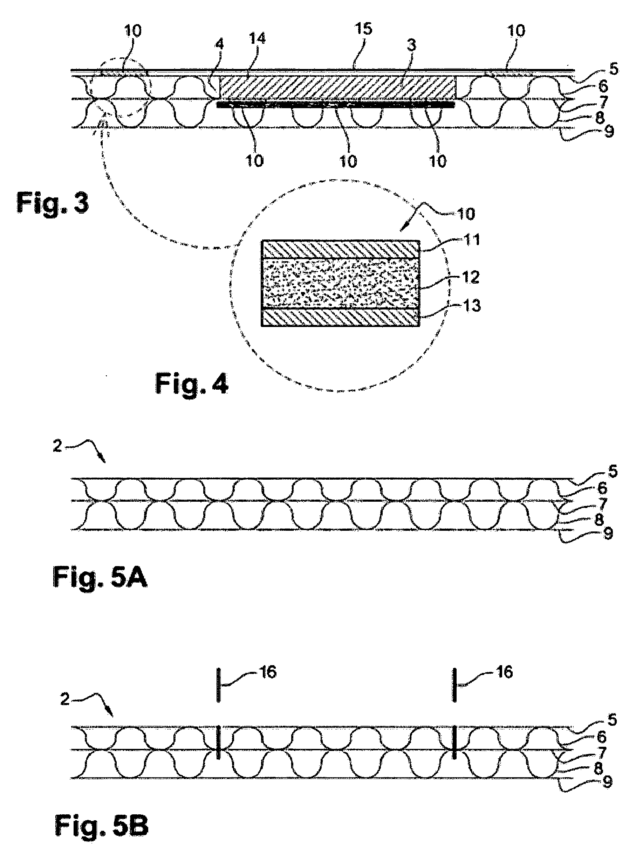

En référence aux figures 2 et 3, ladite pièce sensiblement rectangulaire en carton ondulé (2) est obtenue dans du carton ondulé à double cannelure dans lequel est formé au moins un creux (4), ladite pièce amortissante (3) s'étendant dans ledit creux (4) de telle sorte que la face supérieure de ladite pièce amortissante (3) affleure la face supérieure de la pièce rectangulaire en carton ondulé (2).

On notera que dans cet exemple particulier de réalisation, l'élément de toit est constitué d'une pièce en carton ondulé de forme sensiblement rectangulaire et d'une unique pièce amortissante également de forme rectangulaire ; toutefois, il est bien évident que la pièce en carton ondulé pourra présenter une forme quelconque et que l'élément de toit pourra comporter une ou plusieurs pièces amortissantes de forme quelconque sans pour autant sortir du cadre de l'invention.

En référence à la figure 3, la pièce en carton ondulé (2) est obtenue dans du carton ondulé à double cannelure dit dissymétrique comportant une cannelure supérieure et une cannelure inférieure, la cannelure supérieure étant plus petite que la cannelure inférieure. Un tel carton ondulé permet de rigidifier la structure tout en conservant un poids faible. De manière usuelle, le collage des différentes couches du carton ondulé à double cannelure est réalisé à l'amidon. Le poids total moyen du carton ondulé est de 1090 g/m2 selon la norme Q 03-031 pour une épaisseur moyenne de 7 mm mesurée selon la norme Q 03-030. Plus précisément, le carton ondulé à double cannelure dissymétrique est constitué d'une couverture supérieure (5) en Kraftliner de poids moyen compris entre 200 et 225 g/m2, une cannelure supérieure (6) dite Mi-Chimique de poids moyen compris entre 140 et 160 g/m2, une couverture médiane (7) en Kraftliner de poids moyen compris entre 175 et 200 g/m2, une cannelure inférieure (8) Mi-Chimique de poids moyen compris entre 140 et 160 g/m2 et une couverture inférieure (9) en Kraftliner de poids moyen compris entre 200 et 225 g/m2. La cannelure supérieure (6) du carton ondulé en contact avec le pavillon de toit est plus petite que la cannelure inférieure (8) sur la face du carton opposée au pavillon de toit. Un tel carton ondulé est notamment commercialisé par la société International Paper sous la référence qualité BC992. Les principales caractéristiques techniques de ce carton sont une résistance moyenne à l'éclatement selon la norme NF Q 03-052 : ECLT = 2500 Kpa, une résistance moyenne à la compression sur chant selon la norme NF EN ISO 3037 : ECT=15 KN/m et une absorption d'eau selon la norme NF EN 20535 : COBB recto<155 g/m2 et COBB verso<155 g/m2.

Par ailleurs, en référence à la figure 3, ledit creux (4) est formé dans la pièce en carton ondulé (2) par une découpe dans la cannelure supérieure (6) et dans une partie de la cannelure inférieure (8) et par un écrasement de la partie découpée. La découpe dans les cannelures supérieure (6) et inférieure (8) est obtenue par tout moyen de découpe approprié bien connu de l'homme du métier.

Afin d'assurer la fixation de l'élément de toit sur le pavillon de toit, la pièce en carton ondulé (2) comporte une pluralité de bandes d'adhésif sensible à la pression (10) déposées sur la face supérieure de ladite pièce en carton ondulé (2), c'est-à-dire sur la couverture supérieure (5), et sur la paroi de fond du creux (4) recevant la pièce amortissante (3).

En référence à la figure 4, les bandes d'adhésif sensible à la pression (10) consistent dans des bandes d'adhésif comportant une première couche d'adhésif sensible à la pression (11), une couche en mousse (12) et une seconde couche d'adhésif sensible à la pression (13). Ladite couche en mousse (12) présente de préférence une épaisseur comprise entre 500 et 1300 µm et les couches d'adhésif sensible à la pression (11) et (13) présentent une épaisseur comprise entre 50 et 100 µm. Lesdites couches d'adhésif sensible à la pression (11) et (13) sont obtenues dans un adhésif acrylique à base solvant auto-réticulant. De plus, la couche de mousse présente une densité comprise entre 40 Kg/m3 et 160 Kg/m3 et est obtenue dans de la mousse de Polyethylène (PE) à cellules fermées réticulée physique. Par exemple, les bandes d'adhésif (10) sensible à la pression sont constituées d'une mousse de PolyEthylène réticulé à cellules fermées, noire, densité 143 Kg/m3, épaisseur 0.8 mm, comprenant un protecteur film ou papier siliconé 2 faces différenciées, et dont les masses adhésives sur chaque face de la mousse sont constituées de masses adhésives acryliques solvant auto-réticulables fournies par la société CYTEC sous la référence Gelva GMS 2835, 85 g/m2, après traitement Corona des 2 faces de la mousse et enduction par transfert de la masse adhésive. Alternativement, les bandes d'adhésif (10) sensible à la pression sont constituées d'une mousse de Polyéthylène réticulé à cellules fermées, blanche, densité 55 Kg/m3, épaisseur 1mm, comprenant un protecteur film ou papier siliconé 2 faces différenciées, et dont les masses adhésives sur chaque face de la mousse sont constituées de masses adhésives acryliques solvant auto-réticulables fournies par la société CYTEC sous la référence Gelva GMS 2835, 80 g/m2 sur chaque face, après traitement Corona des 2 faces de la mousse et enduction par transfert de la masse adhésive.

Par ailleurs, en référence à la figure 3, la face supérieure de la pièce amortissante (3) comporte une couche d'un adhésif sensible à la pression (14). De préférence, la pièce amortissante présente un grammage surfacique compris entre 6 et 15 Kg/m2 et consiste en une plaque de masse lourde bitumeuse dite IFF selon l'acronyme de « Insonorisant Fusible en Feuille », qui peut avantageusement comporter des charges minérales et/ou des charges magnétiques.

Par ailleurs, en référence à la figure 3, l'élément de toit suivant l'invention comporte un film protecteur (15) coiffant les bandes d'adhésif sensible à la pression (10) déposées sur la face supérieure de la pièce en carton ondulé (2) et la couche d'adhésif sensible à la pression (14) de la face supérieure de la pièce amortissante (3). Ledit film protecteur (15) consiste dans une feuille de papier siliconée ou dans tout autre film protecteur équivalent bien connu de l'homme du métier. On notera que l'élément de toit suivant l'invention ne comporte ainsi qu'un seul film protecteur (15) à retirer préalablement à la pose de l'élément de toit ce qui facilite sa pose et réduit la pollution du lieu de montage.

On expliquera maintenant le procédé de fabrication de l'élément de toit suivant l'invention en référence aux figures 5A à 5E.

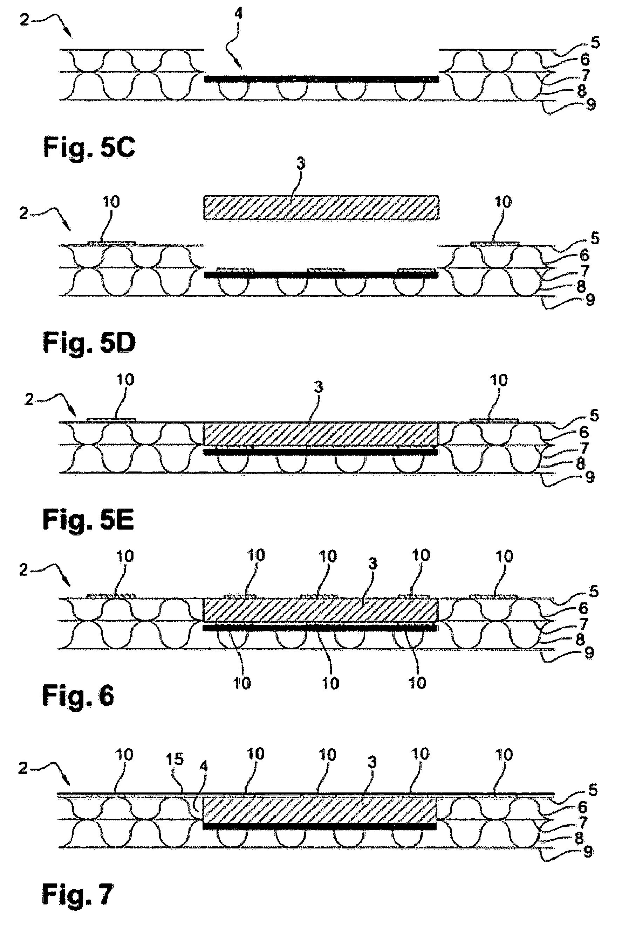

A partir d'une pièce de carton ondulé (2) à double cannelure dissymétrique préalablement découpée à la forme requise, en l'espèce une forme sensiblement rectangulaire, en référence à la figure 5A, on procède à la découpe d'une forme centrale à partir de moyens de découpe adaptés (16) à travers la couverture extérieure (5), la cannelure supérieure (6), la couverture médiane (7) et la cannelure inférieure (8) à mi-chair (figure 5B). La forme ainsi découpée, en référence à la figure 5C, est alors écrasée jusqu'à la profondeur de découpe, c'est-à-dire jusqu'à mi-chair de la cannelure inférieure (8) pour former un creux (4) dans la pièce de carton ondulé (2). En référence à la figure 5D, une pluralité de bandes d'adhésif sensible à la pression (10) est déposée sur la face supérieure de ladite pièce en carton ondulé (2), c'est-à-dire sur la couverture supérieure (5), et sur la paroi de fond du creux (4). Ensuite, en référence à la figure 5E, la pièce amortissante (3) est positionnée dans le creux (4) et le film protecteur (15) est déposé pour coiffer les bandes d'adhésif sensible à la pression (10) déposées sur la face supérieure de la pièce en carton ondulé (2) et la couche d'adhésif sensible à la pression (14) de la face supérieure de la pièce amortissante (3).

On notera que les bandes d'adhésif (10) à double faces sont posées avec un film protecteur protégeant la face supérieure desdites bandes, puis le film protecteur de chacune desdites bandes d'adhésif (10) à double face est retiré préalablement au dépôt du film protecteur (15) couvrant la totalité de la surface de la pièce en carton ondulé (2).

Il va de soi que les bandes d'adhésif (10) à double faces pourront être déposées sans leur film protecteur par tout procédé de transfert bien connu de l'homme du métier, permettant de retirer le film protecteur lors de la pose, sans pour autant sortir du cadre de l'invention.

Selon une première variante d'exécution de l'élément de toit suivant l'invention, en référence à la figure 6, ledit élément de toit pourra comporter des bandes d'adhésif sensible à la pression (10) déposées sur la face supérieure de la pièce amortissante (3), cette dernière ne comportant pas de couche d'adhésif sensible à la pression (14).

Selon une seconde variante d'exécution de l'élément de toit suivant l'invention, en référence à la figure 7, la pièce amortissante (3) est simplement encastrée dans le creux (4), ledit creux (4) ne comportant pas sur son fond de bandes d'adhésif sensible à la pression. Ladite pièce amortissante (3) ne comporte pas également de couche d'adhésif sensible à la pression sur sa face supérieure mais uniquement des bandes d'adhésif sensible à la pression (10) déposées sur la face supérieure de ladite pièce amortissante après son encastrement.

Il est bien évident que la pièce en carton ondulé pourra être obtenu dans du carton ondulé à double cannelure dont la cannelure supérieure présente des dimensions et formes identiques à la cannelure inférieure ou dans une pièce en carton ondulé à simple cannelure dont une partie est découpée pour former un trou traversant puis replié est collé sur la seconde partie pour former la pièce en carton ondulé à double cannelure ou d'une première pièce en carton ondulé à simple cannelure et d'une seconde pièce en carton ondulé à simple cannelure, de même forme et dimension que la première pièce, et dans laquelle un trou traversant est découpé, la seconde pièce étant collée sur la première pièce sans pour autant sortir du cadre de l'invention.

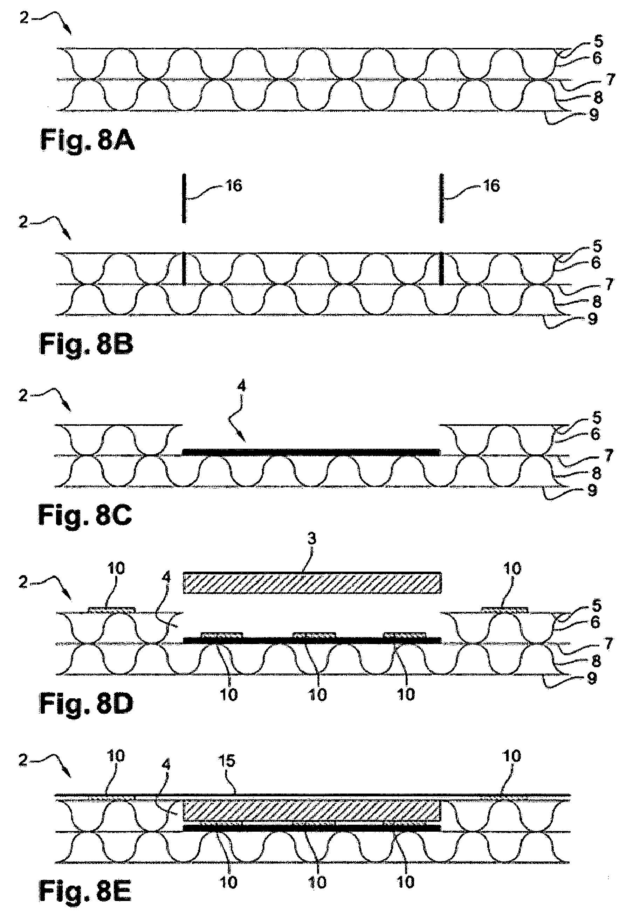

Ainsi, on décrira maintenant une première variante d'exécution du procédé de fabrication de l'élément de toit conforme à l'invention en référence aux figures 8A à 8E.

A partir d'une pièce de carton ondulé (2) à double cannelure symétrique, c'est-à-dire un carton ondulé à double cannelure dont la cannelure supérieure présente des dimensions et formes identiques à la cannelure inférieure, préalablement découpée à la forme requise, en l'espèce une forme sensiblement rectangulaire, en référence à la figure 8A, on procède à la découpe d'une forme centrale à partir de moyens de découpe adaptés (16) à travers la couverture extérieure (5) et la cannelure supérieure (6) (figure 8B). La forme ainsi découpée, en référence à la figure 8C, est alors écrasée jusqu'à la profondeur de découpe, c'est-à-dire jusqu'à la couverture médiane (7) pour former un creux (4) dans la pièce de carton ondulé (2). En référence à la figure 8D, une pluralité de bandes d'adhésif sensible à la pression (10) est déposée sur la face supérieure de ladite pièce en carton ondulé (2), c'est-à-dire sur la couverture supérieure (5), et sur la paroi de fond du creux (4). Ensuite, en référence à la figure 8E, la pièce amortissante (3) est positionnée dans le creux (4) et le film protecteur (15) est déposé pour coiffer les bandes d'adhésif sensible à la pression (10) déposées sur la face supérieure de la pièce en carton ondulé (2) et la couche d'adhésif sensible à la pression (14) de la face supérieure de la pièce amortissante (3).

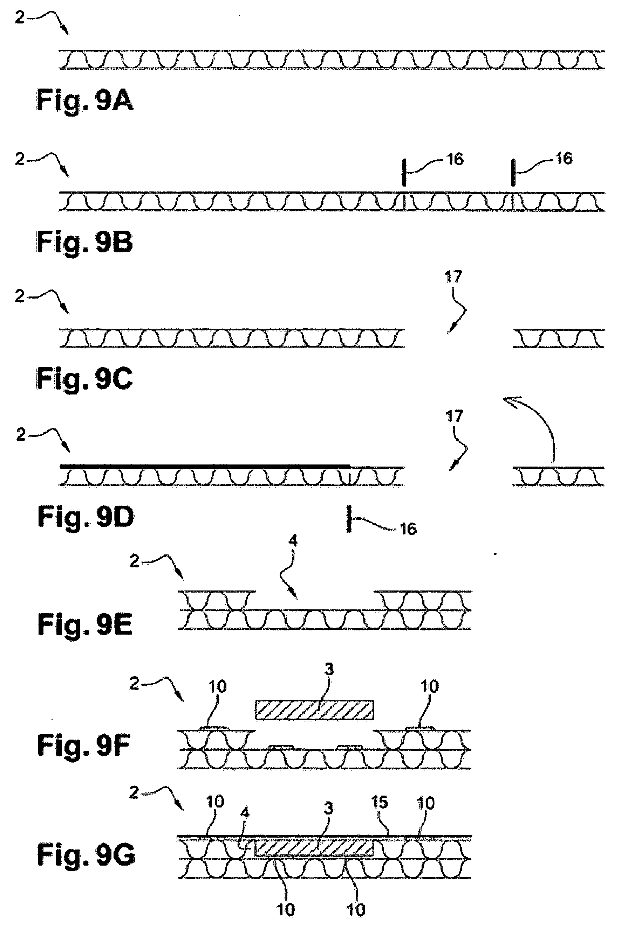

On décrira maintenant une seconde variante d'exécution du procédé de fabrication de l'élément de toit conforme à l'invention en référence aux figures 9A à 9G.

A partir d'une pièce de carton ondulé (2) à simple cannelure, préalablement découpées à la forme requise, en l'espèce une forme sensiblement rectangulaire, en référence à la figure 9A, on procède à la découpe d'un trou traversant (17) à partir de moyens de découpe adaptés (16) à travers la couverture supérieure, la cannelure et la couverture inférieure (figure 9B et 9C). En référence à la figure 9D, on recouvre la couverture supérieure de colle et on procède à une découpe partielle de la pièce en carton ondulé (2) à travers la couverture inférieure et la cannelure pour former une ligne de pliage. On replie alors la partie comportant le trou traversant (17) sur l'autre partie de la pièce en carton ondulé (2) pour former une pièce en carton ondulé à double cannelure symétrique comportant un creux (4) (figure 9E). En référence à la figure 9F, une pluralité de bandes d'adhésif sensible à la pression (10) est déposée sur la face supérieure de ladite pièce en carton ondulé (2), c'est-à-dire sur la couverture supérieure (5), et sur la paroi de fond du creux (4). Ensuite, en référence à la figure 9G, la pièce amortissante (3) est positionnée dans le creux (4) et le film protecteur (15) est déposé pour coiffer les bandes d'adhésif sensible à la pression (10) déposées sur la face supérieure de la pièce en carton ondulé (2) et la couche d'adhésif sensible à la pression (14) de la face supérieure de la pièce amortissante (3).

On notera que les bandes d'adhésif (10) à double faces sont posées avec un film protecteur protégeant la face supérieure desdites bandes, puis le film protecteur de chacune desdites bandes d'adhésif (10) à double face est retiré préalablement au dépôt du film protecteur (15) couvrant la totalité de la surface de la pièce en carton ondulé (2).

Il va de soi que les bandes d'adhésif (10) à double faces pourront être déposées sans leur film protecteur par tout procédé de transfert bien connu de l'homme du métier, permettant de retirer le film protecteur lors de la pose, sans pour autant sortir du cadre de l'invention.

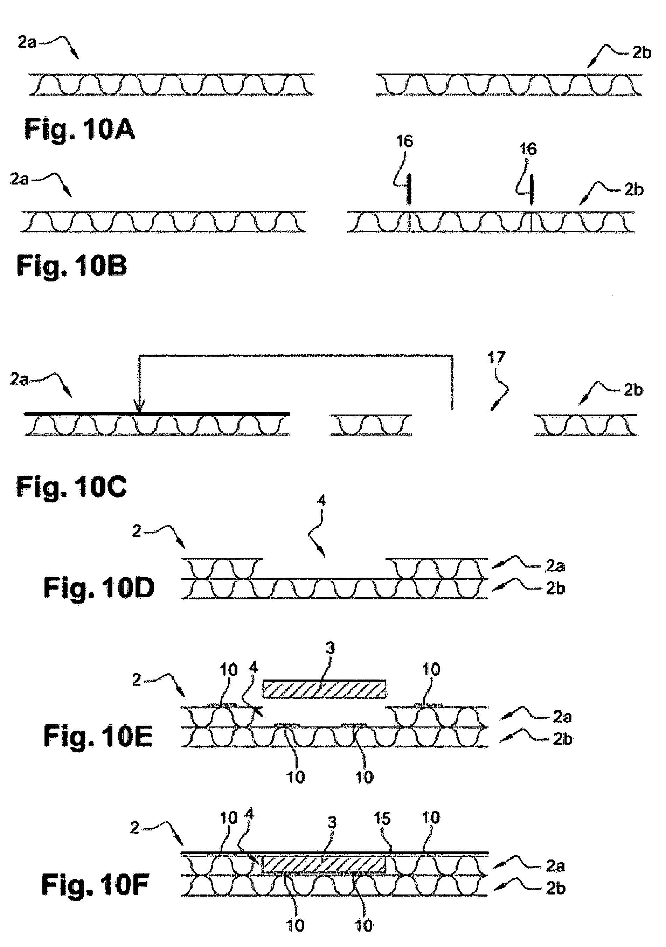

On décrira maintenant une dernière variante d'exécution du procédé de fabrication de l'élément de toit conforme à l'invention en référence aux figures 10A à 10F.

A partir de deux pièces de carton ondulé (2a) et (2b) à simple cannelure, préalablement découpée à la forme requise, en l'espèce une forme sensiblement rectangulaire, en référence à la figure 10A, on procède à la découpe d'un trou traversant (17) à partir de moyens de découpe adaptés (16) à travers la couverture supérieure, la cannelure et la couverture inférieure (figure 10B) de l'une des pièces (2b) de carton ondulé. En référence à la figure 10C, on recouvre la couverture supérieure de la première pièce de carton ondulé (2a) de colle et on colle la seconde pièce de carton ondulé (2b) sur la première pièce de carton ondulé (2a) pour former une pièce en carton ondulé à double cannelure symétrique comportant un creux (4) (figure 10D). En référence à la figure 10E, une pluralité de bandes d'adhésif sensible à la pression (10) est déposée sur la face supérieure de ladite pièce en carton ondulé (2), c'est-à-dire sur la couverture supérieure (5), et sur la paroi de fond du creux (4). Ensuite, en référence à la figure 10F, la pièce amortissante (3) est positionnée dans le creux (4) et le film protecteur (15) est déposé pour coiffer les bandes d'adhésif sensible à la pression (10) déposées sur la face supérieure de la pièce en carton ondulé (2) et la couche d'adhésif sensible à la pression (14) de la face supérieure de la pièce amortissante (3).

On notera que les bandes d'adhésif (10) à double faces sont posées avec un film protecteur protégeant la face supérieure desdites bandes, puis le film protecteur de chacune desdites bandes d'adhésif (10) à double face est retiré préalablement au dépôt du film protecteur (15) couvrant la totalité de la surface de la pièce en carton ondulé (2).

Il va de soi que les bandes d'adhésif (10) à double faces pourront être déposées sans leur film protecteur par tout procédé de transfert bien connu de l'homme du métier, permettant de retirer le film protecteur lors de la pose, sans pour autant sortir du cadre de l'invention.

Enfin, il est bien évident que les exemples que l'on vient de donner ne sont que des illustrations particulières en aucun cas limitatives quant aux domaines d'application de l'invention.

## Revendications

1. Elément de toit, en particulier panneau intérieur de plafond pour un toit de véhicule, pour améliorer la rigidité dudit toit comportant une pièce en carton ondulé (2) et au moins une pièce dite amortissante (3) apte à absorber les vibrations, ladite pièce amortissante (3) étant solidaire de la pièce en carton ondulé (2), ladite pièce en carton ondulé (2) est obtenue dans du carton ondulé à double cannelure, ***caractérisé* en ce que** dans le carton est formé au moins un creux (4), ladite pièce amortissante (3) s'étendant dans ledit creux (4) de telle sorte que la face supérieure de ladite pièce amortissante (3) affleure la face supérieure de la pièce en carton ondulé (2).

2. Elément de toit suivant la revendication précédente ***caractérisé* en ce que** la pièce en carton ondulé (2) comporte une pluralité de bandes d'adhésif sensible à la pression (10) déposées sur la face supérieure de ladite pièce en carton ondulé (2) et sur la paroi de fond du creux (4) recevant la pièce amortissante.

3. Elément de toit suivant l'une quelconque des revendications 1 ou 2 ***caractérisé* en ce que** la face supérieure de la pièce amortissante (3) comporte une couche d'un adhésif sensible à la pression.

4. Elément de toit suivant l'une quelconque des revendications 1 à 3 ***caractérisé* en ce que** la pièce amortissante (3) présente un grammage surfacique compris entre 4 et 15 Kg/m2.

5. Elément de toit suivant l'une quelconque des revendications 1 à 4 ***caractérisé* en ce que** la pièce amortissante (3) consiste en une plaque de masse lourde bitumeuse.

6. Elément de toit suivant la revendication 5 ***caractérisé* en ce que** la plaque bitumeuse comporte des charges minérales et/ou des charges magnétiques.

7. Elément de toit suivant les revendications 2 et 3 ***caractérisé* en ce qu'**il comporte un film protecteur (15) coiffant les bandes d'adhésif sensible à la pression (10) déposées sur la face supérieure de la pièce en carton ondulé (2) et la couche d'adhésif sensible à la pression de la face supérieure de la pièce amortissante (3).

8. Elément de toit suivant la revendication 7 ***caractérisé* en ce que** le film protecteur (15) consiste dans une feuille de papier siliconée.

9. Elément de toit suivant l'une quelconque des revendications 1 à 8 ***caractérisé* en ce que** la pièce en carton ondulé (2) est obtenue dans du carton ondulé à double cannelure comportant une cannelure supérieure (6) et une cannelure inférieure (8), la cannelure supérieure (6) étant plus petite que la cannelure inférieure (8).

10. Elément de toit suivant la revendication 9 ***caractérisé* en ce que** le creux (4) est formé dans la pièce en carton ondulé (2) par une découpe dans la cannelure supérieure (6) et dans une partie de la cannelure inférieure (5) et par un écrasement de la partie découpée.

11. Elément de toit suivant l'une quelconque des revendications 1 à 8 ***caractérisé* en ce que** la pièce en carton ondulé (2) est obtenue dans du carton ondulé à double cannelure dont la cannelure supérieure (6) présente des dimensions et formes identiques à la cannelure inférieure (8).

12. Elément de toit suivant l'une quelconque des revendications 1 à 8 ***caractérisé* en ce que** la pièce en carton ondulé (2) est obtenue dans une pièce en carton ondulé à simple cannelure dont une partie est découpée pour former un trou traversant (17) puis repliée et collée sur la seconde partie pour former la pièce en carton ondulé (2) à double cannelure.

13. Elément de toit suivant l'une quelconque des revendications 1 à 8 ***caractérisé* en ce que** la pièce en carton ondulé (2) est constituée d'une première pièce en carton ondulé à simple cannelure (2a) et d'une seconde pièce en carton ondulé à simple cannelure (2b), de même forme et dimension que la première pièce (2a), et dans laquelle un trou traversant (17) est découpé, la seconde pièce (2b) étant collée sur la première pièce (2a).

14. Elément de toit suivant l'une quelconque des revendications 2 à 13 ***caractérisé* en ce que** les bandes d'adhésif sensible à la pression (10) consistent dans des bandes d'adhésif comportant une première couche d'adhésif sensible à la pression (11), une couche en mousse (12) et une seconde couche d'adhésif sensible à la pression (13).

15. Elément de toit suivant la revendication 14 ***caractérisé* en ce que** la couche de mousse (12) présente une épaisseur comprise entre 500 et 1300 µm.

16. Elément de toit suivant l'une quelconque des revendications 14 ou 15 ***caractérisé* en ce que** les couches d'adhésif sensible à la pression (10) présentent une épaisseur comprise entre 50 et 100 µm.

17. Elément de toit suivant l'une quelconque des revendications 14 à 16 ***caractérisé* en ce que** la couche de mousse (12) présente une densité comprise entre 40 Kg/m3 et 160 Kg/m3.

18. Elément de toit suivant l'une quelconque des revendications 14 à 17 ***caractérisé* en ce que** la couche de mousse (12) est obtenue dans de la mousse de Polyéthylène (PE) à cellules fermées réticulée physique.

19. Elément de toit suivant l'une quelconque des revendications 14 à 18 ***caractérisé* en ce que** les couches d'adhésif sensible à la pression (10) sont obtenues dans un adhésif acrylique à base solvant auto-réticulant.

20. Elément de toit suivant l'une quelconque des revendications 14 à 19 ***caractérisé* en ce que** les bandes d'adhésif sensible à la pression (10) présentent une résistance en traction-cisaillement avant vieillissement supérieure ou égale à 0,1 MPa .

21. Elément de toit suivant l'une quelconque des revendications 14 à 20 ***caractérisé* en ce que** les bandes d'adhésif sensible à la pression (10) présentent une résistance en traction-cisaillement après vieillissement supérieure ou égale à 0.2 MPa.

## Patentansprüche

1. Dachelement, insbesondere innere Deckenplatte für ein Fahrzeugdach, zur Verbesserung der Steifigkeit des Dachs, aufweisend ein Teil aus Wellpappe (2) und mindestens ein dämpfendes Teil (3), das imstande ist, die Vibrationen zu absorbieren, wobei das dämpfende Teil (3) mit dem Teil aus Wellpappe (2) fest verbunden ist, wobei das Teil aus Wellpappe (2) aus Wellpappe mit doppelter Welle hergestellt ist, **dadurch gekennzeichnet, dass** in die Pappe mindestens ein Hohlraum (4) eingearbeitet ist, wobei sich das dämpfende Teil (3) in dem Hohlraum (4) derart erstreckt, dass die obere Fläche des dämpfende Teils (3) mit der oberen Fläche des Teils aus Wellpappe (2) bündig ist.

2. Dachelement nach vorangehendem Anspruch, **dadurch gekennzeichnet, dass** das Teil aus Wellpappe (2) eine Vielzahl von druckempfindlichen Haftstreifen (10) aufweist, die auf der oberen Fläche des Teils aus Wellpappe (2) und auf der Bodenwand des Hohlraums (4), der das dämpfende Teil aufnimmt, angebracht sind.

3. Dachelement nach einem der Ansprüche 1 oder 2, **dadurch gekennzeichnet, dass** die obere Fläche des dämpfenden Teils (3) eine druckempfindliche Haftschicht aufweist.

4. Dachelement nach einem der Ansprüche 1 bis 3, **dadurch gekennzeichnet, dass** das dämpfende Teil (3) ein Flächengewicht zwischen 4 und 15 kg/m² inklusive aufweist.

5. Dachelement nach einem der Ansprüche 1 bis 4, **dadurch gekennzeichnet, dass** das dämpfende Teil (3) aus einer Platte schwerer bituminöser Masse besteht.

6. Dachelement nach Anspruch 5, **dadurch gekennzeichnet, dass** die bituminöse Platte mineralische Chargen und/oder magnetische Chargen aufweist.

7. Dachelement nach den Ansprüchen 2 und 3, **dadurch gekennzeichnet, dass** es eine Schutzfolie (15) aufweist, die die druckempfindlichen Haftstreifen (10), die auf der oberen Fläche des Teils aus Wellpappe (2) angebracht sind, und die druckempfindliche Haftschicht der oberen Fläche des dämpfenden Teils (3) bedeckt.

8. Dachelement nach Anspruch 7, **dadurch gekennzeichnet, dass** die Schutzfolie (15) aus einem silikonisierten Papierbogen besteht.

9. Dachelement nach einem der Ansprüche 1 bis 8, **dadurch gekennzeichnet, dass** das Teil aus Wellpappe (2) aus Wellpappe mit doppelter Welle hergestellt ist, die eine oberer Welle (6) und eine untere Welle (8) aufweist, wobei die obere Welle (6) kleiner als die untere Welle (8) ist.

10. Dachelement nach Anspruch 9, **dadurch gekennzeichnet, dass** der Hohlraum (4) in das Teil aus Wellpappe (2) mittels eines Ausschnitts in der oberen Welle (6) und in einem Abschnitt der unteren Welle (5) und durch Zusammendrücken des ausgeschnittenen Abschnitts gebildet ist.

11. Dachelement nach einem der Ansprüche 1 bis 8, **dadurch gekennzeichnet, dass** das Teil aus Wellpappe (2) aus Wellpappe mit doppelter Welle hergestellt ist, deren obere Welle (6) Abmessungen und Formen hat, die mit der unteren Welle (8) identisch sind.

12. Dachelement nach einem der Ansprüche 1 bis 8, **dadurch gekennzeichnet, dass** das Teil aus Wellpappe (2) aus einem Teil aus Wellpappe mit einfacher Welle hergestellt ist, von dem ein Abschnitt ausgeschnitten ist, um ein Durchgangsloch (17) zu bilden, und danach gefaltet und auf den zweiten Abschnitt geklebt wird, um das Teil aus Wellpappe (2) mit doppelter Welle zu bilden.

13. Dachelement nach einem der Ansprüche 1 bis 8, **dadurch gekennzeichnet, dass** das Teil aus Wellpappe (2) aus einem ersten Teil aus Wellpappe mit einfacher Welle (2a) und einem zweiten Teil aus Wellpappe mit einfacher Welle (2b) mit derselben Form und Größe wie das erste Teil (2a) gebildet ist und in welchem ein Durchgangsloch (17) ausgeschnitten ist, wobei das zweite Teil (2b) auf das erste Teil (2a) geklebt ist.

14. Dachelement nach einem der Ansprüche 2 bis 13, **dadurch gekennzeichnet, dass** die druckempfindlichen Haftstreifen (10) aus Haftstreifen bestehen, die eine erste druckempfindliche Haftschicht (11), eine Schaumstoffschicht (12) und eine zweite druckempfindliche Haftschicht (13) aufweisen.

15. Dachelement nach Anspruch 14, **dadurch gekennzeichnet, dass** die Schaumstoffschicht (12) eine Dicke zwischen 500 und 1300 µm inklusive aufweist.

16. Dachelement nach einem der Ansprüche 14 oder 15, **dadurch gekennzeichnet, dass** die druckempfindlichen Haftschichten (10) eine Dicke zwischen 50 und 100 µm inklusive aufweisen.

17. Dachelement nach einem der Ansprüche 14 bis 16, **dadurch gekennzeichnet, dass** die Schaumstoffschicht (12) eine Dichte zwischen 40 kg/m³ und 160 kg/m³ inklusive aufweist.

18. Dachelement nach einem der Ansprüche 14 bis 17, **dadurch gekennzeichnet, dass** die Schaumstoffschicht (12) aus Polyethylenschaum (PE) mit körperlich vernetzten geschlossenen Zellen hergestellt ist.

19. Dachelement nach einem der Ansprüche 14 bis 18, **dadurch gekennzeichnet, dass** die druckempfindlichen Haftschichten (10) aus einem Acrylhaftstoff auf der Basis eines selbstvernetzenden Lösungsmittels hergestellt sind.

20. Dachelement nach einem der Ansprüche 14 bis 19, **dadurch gekennzeichnet, dass** die druckempfindlichen Haftschichten (10) eine Zug-Scher-Resistenz vor Alterung von über oder gleich 0,1 MPa aufweisen.

21. Dachelement nach einem der Ansprüche 14 bis 20, **dadurch gekennzeichnet, dass** die druckempfindlichen Haftschichten (10) eine Zug-Scher-Resistenz nach Alterung von über oder gleich 0,2 MPa aufweisen.

## Claims

1. A roof element, in particular an inner ceiling panel for a vehicle roof, for improving the rigidity of said roof including a corrugated cardboard part (2) and at least one so-called damping part (3) able to absorb vibrations, said damping part (3) being integral with the corrugated cardboard part (2), said corrugated cardboard part (2) is obtained in double groove corrugated cardboard, ***characterized* in that** in the cardboard, at least one recess is formed, said damping part (3) extending in said recess (4) so that the upper face of said damping part (3) is flush with the upper face of the corrugated cardboard part (2).

2. The roof element according to the preceding claim, ***characterized* in that** the corrugated cardboard part (2) includes a plurality of pressure-sensitive adhesive strips (10) deposited on the upper face of said corrugated cardboard part (2) and on the bottom groove of the recess (4)receiving the damping part.

3. The roof element according to any of claims 1 or 2, ***characterized* in that** the upper face of the damping part (3) includes a layer of a pressure-sensitive adhesive.

4. The roof element according to any of claims 1 to 3, ***characterized* in that** the damping part (3) has a basis surface weight comprised between 4 and 15 kg/m².

5. The roof element according to any of claims 1 to 4, ***characterized* in that** the damping part (3) consists in a bituminous heavy mass plate.

6. The roof element according to claim 5, ***characterized* in that** the bituminous plate includes mineral fillers or magnetic fillers.

7. The roof element according to claims 2 and 3, ***characterized* in that** it includes a protective film (15) capping the pressure-sensitive adhesive strips (10) deposited on the upper face of the corrugated cardboard part (2) and the pressure-sensitive adhesive layer of the upper face of the damping part (3).

8. The roof element according to claim 7, ***characterized* in that** the protective film (15) consists in a siliconized paper sheet.

9. The roof element according to any of claims 1 to 8, ***characterized* in that** the corrugated cardboard part (2) is obtained in double groove corrugated cardboard including an upper groove (6) and a lower groove (8), the upper groove (6) being smaller than the lower groove (8).

10. The roof element according to claim 9, ***characterized* in that** the recess (4) is formed in the corrugated cardboard part (2) by a cutout in the upper groove (6) and in a portion of the lower groove (5) and by crushing of the cut-out portion.

11. The roof element according to any of claims 1 to 8, ***characterized* in that** the corrugated cardboard part (2) is obtained in double groove corrugated cardboard, the upper groove (6) of which has dimensions and shapes identical with the lower groove (8).

12. The roof element according to any of claims 1 to 8, ***characterized* in that** the corrugated cardboard part (2) is obtained in a single groove corrugated cardboard part, a portion of which is cut out in order to form a through-hole (17) and then folded back and adhesively bonded on the second portion in order to form the double groove corrugated cardboard part (2).

13. The roof element according to any of claims 1 to 8, ***characterized* in that** the corrugated cardboard part (2) consists of a first single groove corrugated cardboard part (2a) and of a second single groove corrugated cardboard part (2b) with the same shape and dimension as the first part (2a), and wherein a through-hole is cut out, the second part being adhesively bonded onto the first part (2a).

14. The roof element according to any of claims 2 to 13, ***characterized* in that** the pressure-sensitive adhesive strips (10) consist in adhesive strips including a first pressure-sensitive adhesive layer (11), a foam layer (12) and a second pressure-sensitive adhesive layer (13).

15. The roof element according to claim 14, ***characterized* in that** the foam layer (12) has a thickness comprised between 500 and 1,300 µm.

16. The roof element according to any of claims 14 or 15, ***characterized* in that** the pressure-sensitive adhesive layers (10) have a thickness comprised between 50 and 100 µm.

17. The roof element according to any of claims 14 to 16, ***characterized* in that** the foam layer (12) has a specific gravity comprised between 40 kg/m³ and 160 kg/m³.

18. The roof element according to any of claims 14 to 17, ***characterized* in that** the foam layer (12) is obtained in physical crosslinked closed-cell polyethylene (PE) foam.

19. The roof element according to any of claims 14 to 18, ***characterized* in that** the pressure-sensitive adhesive layers (10) are obtained in a self-crosslinking solvent-based acrylic adhesive.

20. The roof element according to any of claims 14 to 19, ***characterized* in that** the pressure-sensitive adhesive strips (10) have a tensile-shearing strength before aging greater than or equal to 0.1 MPa.

21. The roof element according to any of claims 14 to 20, ***characterized* in that** the pressure-sensitive adhesive strips (10) have a tensile-shearing strength before aging greater than or equal to 0.2 MPa.
